# EUROPÄISCHE PATENTSCHRIFT

(11) **EP 0 699 118 B1**
(45) Veröffentlichungstag und Bekanntmachung des Hinweises auf die Patenterteilung: **18.12.1996**
(21) Anmeldenummer: 94909936.0
(22) Anmeldetag: 11.03.1994
(51) Int. Cl.: B25F 1/02, B25G 3/26, B60D 1/145

(54) **BORDWERKZEUG**
ON-BOARD TOOL
OUTIL DE BORD

(30) Priorität: 19.05.1993 DE 9307619 U; 13.11.1993 DE 9317715 U
(43) Veröffentlichungstag der Anmeldung: 06.03.1996
(73) Patentinhaber: WGF FAHRZEUGTEILE GmbH, D-37170 Uslar-Volpriehausen (DE)
(72) Erfinder: WAACK, Björn, D-22395 Hamburg (DE); FRIEDRICH, Rainer, D-37191 Katlenburg (DE); GÜRTLER, Jürgen, D-37186 Moringen (DE)
(74) Vertreter: Sobisch, Peter, Dipl.-Ing.
(86) Internationale Anmeldenummer: EP9400762
(87) Internationale Veröffentlichungsnummer: WO9426473

(56) Entgegenhaltungen:
- WO-A-89/09709
- CH-A- 680 721
- US-A- 2 838 327
- US-A- 4 023 221
- US-A- 5 086 674

## Beschreibung

Die Erfindung bezieht sich auf ein Bordwerkzeug entsprechend dem Oberbegriff des Anspruchs 1.

Ein derartiges Bordwerkzeug ist aus der US-A-4 023 221 bekannt.

Bordwerkzeuge für Kraftfahrzeuge müssen von ihren absoluten Abmessungen her auf die zur Verfügung stehenden Stauräume insbesondere von Personenkraftwagen bzw. Lastkraftwagen hin ausgelegt sein. Sie müssen darüber hinaus je nach dem Verwendungszweck einfach handhabbar und multifunktional nutzbar sein. Dies gilt insbesondere für solche Bordwerkzeuge, die üblicherweise unter schwierigen Bedingungen, beispielsweise bei Verkehrsunfällen, bei ungünstigen Licht- und Witterungsverhältnissen usw. benutzt werden. Zu nennen wären in diesem Zusammenhang auch Fälle von aufgrund bestehender Witterungs- oder Fahrbahnverhältnisse, jedoch auch aufgrund von Fahrwerks- und/oder Motorschäden liegengebliebener Fahrzeuge. So kann es sich beispielsweise darum handeln, ein Fahrzeug abzuschleppen, welches das Vorhandensein einer Abschleppstange oder dergleichen voraussetzt. Erwähnt sei ferner das Problem der gewaltsamen Öffnung einer Kraftfahrzeugtüre, die sich auf üblichem Wege als Folge einer unfallbedingten Rahmendeformation nicht oder nur unter größten Schwierigkeiten öffnen läßt. Bei manchen dieser Fälle, z.B. beim Lösen einer extrem festsitzenden Radmutter wird ferner ein solches Bordwerkzeug benötigt, welches nicht nur einfach handhabbar sein muß, sondern auch zur Übertragung vergleichsweise hoher Kräfte geeignet sein muß.

Aus der CH-A-680 721 ist eine für Kraftfahrzeuge verwendbare Abschleppstange bekannt, welche aus einem Mittelteil und zwei mit diesem verschraubbaren Verbindungsteilen besteht. Letztere tragen an ihren, dem Mittelteil abgekehrten Enden untereinander gleichartige, zum Einhängen in Zugösen an Fahrzeugen bestimmte, um Achsen senkrecht zur Längsachse der Abschleppstange schwenkbare Abschlepphaken, welche in ihrer Einhängeposition einerseits und in ihrer Öffnungsposition andererseits mittels einer entgegen der Rückstellkraft einer Feder verschiebbaren, sich koaxial zu dem jeweiligen Verbindungsteil erstreckenden Muffe fixierbar sind. Zur Überführung in die Schließstellung ausgehend von der Öffnungsstellung muß die genannte Muffe zurückgezogen werden, um eine dementsprechende Schwenkbewegung des Abschlapphakens zu ermöglichen, der in der Schließstellung mittels eines, sich an dem stirnseitigen Ende des Verbindungsteils befindlichen Gummipuffers spielfrei gehalten ist. Der Abschlapphaken ist an den genannten Verbindungsteilen mittels eines Stiftes in einer zumindest nicht ohne weiteres lösbaren Weise schwenkbar fixiert.

Aus der US-A-5 086 674 ist ein Handwerkzeug bekannt, welches aus einem als Hohlprofil ausgebildeten, im Querschnitt sechseckigen Mittelteil besteht, in dessen beide Enden unter Zwischenanordnung secheckiger Einsteckprofile kugelförmige Verbindungsteile einsteckbar und formschlüssig verrastbar sind, welche Verbindungsteile ihrerseits mit mehreren, jeweils sechseckigen Aufnahmeprofilen unterschiedlicher Größe zum Einstecken von diversen Schraubwerkzeugen wie z.B. Schraubenziehern, Schraubenschlüsseln und dergleichen, jeweils unterschiedlicher Größe bestimmt sind.

Schließlich ist aus der US-A-4 023 221 ein weiteres Handwerkzeug bekannt, welches aus einem stangenartigen, aus Zwei Teilen bestehenden Griffteil besteht, welche Teile um eine, sich senkrecht zu deren Längsachse erstreckende Achse schwenkbar aneinander befestigt sind, wobei das eine freie Ende der genannten beiden Teile zur auswechselbaren Anbringung unterschiedlicher Werkzeuge wie einer Axt, einer Schaufel oder einer Hacke benutzt werden kann. Zu diesem Zweck ist das Ende des Teiles mit einem Gewindeabschnitt versehen, der in ein zugeordnetes, an dem jeweiligen Werkzeug angebrachtes Muffenteil einschraubbar ist. Über eine Abwinklung der genannten Teile des Griffteils kann dieses ferner zur Aufnahme eines Sägeblatts benutzt werden. mittels eines langgestreckten metallischen Federelements, welches an seinen gegenüberliegenden Endseiten mit Bolzen einerseits des Muffenteils des Werkzeugteils und andererseits des einen Teils des Griffteils formschlüssig in Eingriff gebracht werden muß und hierbei elastisch derart deformiert wird, daß es einwärts in eine Ausnehmung des Gewindeabschnitts des genanntan Teils des Griffteils eingeführt wird, ist eine verdrehsichere Verbindung zwischen dem Werkzeugteil und dem Griffteil gegeben. Die Montage, insbesondere der Austausche der an dem Griffteil angebrachten Werkzeugteile gestaltet sich aufgrund des genannten Federelements vergleichsweise kompliziert und setzt außerdem eine einwandfreie optische Erkennbarkeit der miteinander zu verbindenden Bauelemente voraus.

Es ist die Aufgabe der Erfindung, ein Bordwerkzeug der eingangs bezeichneten Art zu entwerfen, welches einerseits zur auswechselbaren Befestigung einzelner Geräte für verschiedene Funktionen an beiden Enden der Universalstange ausgestaltet ist, so daß es für verschiedene Gebrauchssituationen leicht anpaßbar ist und welches andererseits auch unter schlechten Lichtverhältnissen einfach handhabbar und multifunktional, insbesondere bei Verkehrsunfällen, Fahrzeughavarien, bei Straßenräumarbeiten usw. nutzbar ist. Gelöst ist diese Aufgabe bei einem gattungsgemäßen Bordwerkzeug durch die Merkmale des Kennzeichnungsteils des Anspruchs 1.

Ausgangspunkt der Erfindung ist eine Universalstange, die an ihrem wenigstens einen Endbereich zur auswechselbaren Befestigung unterschiedlicher Geräte nutzbar ist, die in den oben dargelegten Fällen benötigt werden. Bei einigen dieser Fälle handelt es sich um solche, bei denen lokal eine vergleichsweise hohe Kraft auszuüben ist, so daß über die Stange, die beispielsweise als rohrartiger Grundkörper ausgebildet ist, eine dementsprechende Hebelwirkung ausübbar sein muß. Die Enden der mit der Stange zu kuppelnden Geräte einerseits und das diesen zugekehrte Ende der Universalstange andererseits sind mit Hinblick auf eine auswechselbare Befestigung der genannten Geräte konstruktiv aneinander angepaßt. Die Art der Befestigung kann grundsätzlich beliebig gewählt werden, wobei solchen Befestigungen der Vorzug gegeben wird, die auch unter schlechten Lichtverhältnissen einfach handhabbar sind. Gleichzeitig muß die Befestigung derart beschaffen sein, daß die bei dem bestimmungsgemäßen Gebrauch des Bordwerkzeugs zu erwartenden Kräfte und Momente einwandfrei übertragbar sind. Erfindungsgemäß sind beide Enden der Universalstange mit Hinblick auf die Anbringung von Geräten hin ausgestaltet. Diese Eiden sind untereinander gleichartig ausgebildet. Das gerätemäßig entsprechend bestückte Bordwerkzeug kann eine Abschleppstange, ein Brecheisen, ein Besen, eine Schaufel, ein Gerät zur Kraftverstärkung oder ein Schraubwerkzeug sein. Zur Bereitstellung einer Abschleppstange werden beide Enden der Universalstange mit Kupplungsstangen ausgerüstet, an deren, der Universalstange abgekehrten Enden sich jeweils Abschlepphaken befinden. Die Geometrie der Abschlepphaken kann an übliche Ausführungsformen angelehnt sein, die Zum Einhängen in Abschleppösen von Kraftfahrzeugen bestimmt sind. Es kann auf diese Weise lediglich durch Verbindung der Universeistange an beiden Enden mit den genannten Kupplungsstangen eine Abschleppstange bereitgestellt werden. Durch Anordnung eines Brecheisens an einem Ende der Universalstange besteht beispielsweise bei Verkehrsunfällen die Möglichkeit, Fahrzeugtüran gewaltsam zu öffnen, um Fahrgäste aus dem Innenraum des verunglückten Fahrzeugs herauszuholen, wobei über die Universalstange entsprechend deren Länge eine beträchtliche Hebelwirkung ausübbar ist, so daß der erforderliche Kraftaufwand dementsprechend gering ausfällt. Von großem Nutzen ist eine solche Hebelwirkung beispielsweise auch bei Schraubwerkzeugen, wobei entsprechend der Länge der Universalstange ein entsprechend hohes Drehmoment in das Schraubwerkzeug einleitbar ist, dessen Achse sich senkrecht zu derjenigen der Universalstange erstreckt. Ein Gerät zur Kraftverstärkung dient in Verbindung mit einem herkömmlichen Schraubwerkzeug wie z.B. einem Radmutternschlüssel, Kreuzschlüssel usw. dem erleichterten Lösen extrem festsitzender Radmuttern. Es ist hauptsächlich zur Verwendung bei Lastkraftwagen bestimmt, kann jedoch auch bei Personenkraftwagen eingesetzt werden. Sämtliche zur Verbindung mit der Universalstange bestimmten Geräte sind mit untereinander gleichen Kupplungsabschnitten ausgerüstet, die zum Zusammenwirken mit dem entsprechenden Ende bzw. Gegenabschnitt der Universalstange bestimmt sind. Auf diese Weise steht ein standardisierter, einheitlich handhabbarer Werkzeugsatz, bestehend aus der Universalstange und diversen austauschbaren, an letztere angepaßten Geräten zur Verfügung, der das erfindungsgemäße Bordwerkzeug bildet. Indem die Universalstange eine zur Ausübung einer Signalfunktion geeignete, insbesondere reflektierend wirkende farbliche Beschichtung trägt, ergibt sich der Vorteil, daß dem Straßenverkehr ein weithin sichtbarer Hinweis auf eine Gefahrenquelle, z.B. ein liegengebliebenes Fahrzeug oder auch einen Verkehrsunfall gegeben wird. Insbesondere in der Dämmerung, somit bei schlechten Sichtverhältnissen, jedoch auch bei Tageslicht wird auf diese Weise ein Beitrag zur Verkehrssicherheit geleistet. Insbesondere wird auf diese Weise auch der Nutzer des Bordwerkzeugs geschützt.

Die Merkmale der Ansprüche 2 und 3 sind auf eine besondere Ausgestaltung des Systems aus Kupplungsstange und Abschlepphaken gerichtet. So ist das der Universalstange abgekehrte Ende der Kupplungsstange mit einem Gewindeabschnitt versehen, auf welchen der Abschlepphaken aufschraubbar ist. Gleichzeitig weist dieses Ende der Kupplungsstange eine Dämpfungskappe auf, die aus einem elastomeren Kunststoff besteht und sich in einer bestimmten Anordnung relativ zu dem, eine Zugkraft übertragenden Teil des Abschlepphakens befindet. Auf diese Weise kann erreicht werden, daß der Kupplungshaken nahezu spielfrei mit dem entsprechenden Teil einer Abschleppöse eines Kraftsfahrzeugs in Eingriff bringbar ist, wodurch der Fahrkomfort erheblich verbessert wird. Aufgrund der Schraubverbindung zwischen dem Abschlepphaken und der Kupplungsstange kann das System aus Dämpfungskappe und Abschlepphaken auch unterschiedlichen Abmessungen einer Abschleppöse angepaßt werden.

Die Merkmale der Ansprüche 4 und 5 sind auf eine konkrete Ausgestaltung der lösbaren Verbindung zwischen den Geräten einerseits und der Universalstange andererseits gerichtet, welche den Vorteil einer besonders einfachen Handhabung mit sich bringt. Sobald nämlich die Vorsprünge mit den stirnseitig bezüglich der Universalstange befindlichen Ausnehmungen in Eingriff gelangen, befinden sich die Bohrungen der ineinandergesteckten Enden zwangsläufig in einer fluchtenden Anordnung, welche das Einstecken eines Verriegelungselements, z.B. eines Bolzens in einfachster Weise ermöglicht. Diese Verbindung ist somit auch bei extrem schlechten Lichtverhältnissen zuverlässig handhabbar. Von besonderem Vorteil ist es, wenn der Bolzen oder das sonstige Verriegelungselement unverlierbar an der Universalstange angebracht ist.

Die Merkmale der Ansprüche 6 und 7 sind auf eine weitere vorteilhaft, Ausgestaltung eines Brecheisens gerichtet. So kann der vorderseitige, d.h. dem Kupplungsabschnitt abgekehrte Teil des Brecheisens auf seinem konvex gekrümmten oder abgewinkelten Abschnitt eine Profilierung, z.B. in der Gestalt von Rillen aufweisen, die sich quer zur Längsachse dieses Teils des Brecheisens erstrecken. Über diese Profilierung kann erreicht werden, daß sich beim praktischen Gebrauch ein Formschluß zwischen dieser und zugekehrten Türrahmenabschnitten ergibt, wodurch beim Öffnen der Kraftfahrzeugtür ein Abgleiten des Brecheisens verhindert wird, so daß sich dessen Handhabung vereinfacht. Indem der vorderseitige, schneidenartig auslaufende Teil des Brecheisens eine Einformung aufweist, welche sich in der Schneidenebene erstreckt und beispielsweise die Gestalt eines bezüglich der Mitte der Schneide symmetrisch angeordneten Kreisabschnitts aufweisen kann, ergeben sich beim praktischen Einsatz des Brecheisens zwei Kraftübertragungspunkte, nämlich die seitlichen Endbereiche der Einformung, über welche auf die zu öffnende Kraftfahrzeugtür eingewirkt werden kann.

Das Brecheisen sowie sämtliche metallischen Teile der oben dargelegten Geräte bestehen aus Stahl und sind auf 30 HRC gehärtet.

Die Merkmale der Ansprüche 8 und 9 sind auf ein, zur Kraftverstärkung dienendes Gerät gerichtet, welches in gleicher Weise wie die übrigen, oben bereits beschriebenen Geräte zum Zusammenwirken mit der Universalstange bestimmt und ausgestaltet ist. Dieses Gerät dient in Verbindung mit einem herkömmlichen Radmuttern oder Kreuzschlüssel dem Lösen extrem festsitzender Radmuttern und beruht im wesentlichen auf der, über dieses Gerät ausübbaren Hebelwirkung, wobei die gesamte Länge dieses Hebels durch die Länge des genannten Grundkörpers und der Universalstange bestimmt wird. Es ist demzufolge die Universalstange zum Überschieben über das zugekehrte Ende des jeweiligen Schlüssels bestimmt. Hauptsächliche Anwendung findet dieses Gerät zur Losung der Radmuttern von Lastkraftwagen, so daß der Grundkörper von seinem Innendurchmesser an die Außenabmessungen der zum Lösen der Radmuttern von Lastkraftwagen bestimmten Schlüssel hin bemessen ist. Der genannte rohrförmige Grundkörper kann in unlösbarer Verbindung mit dem Kupplungsabschnitt stehen - diese Verbindung kann jedoch auch lösbar ausgebildet sein, so daß dieses Gerät in einfacher Weise durch Ansetzen eines anderen Grundkörpers auch in Verbindung mit den, zum Lösen der Radmuttern von Personenkraftwagen dienenden Schraubwerkzeugen einsetzbar ist.

Die Erfindung wird im folgenden unter Bezugnahme auf das, in den Zeichnungen dargestellte Ausführungsbeispiel näher erläutert werden. Es zeigen:
Fig. 1 eine Ansicht einer als Abschleppstange ausgerüstete Universalstange;
Fig. 2 eine vergrößerte isolierte Darstellung des einen Endabschnitts der Universalstange;
Fig. 3 eine vergrößerte Darstellung des Kupplungsabschnitts eines zur Verbindung mit der Universalstange bestimmten Gerätes;
Fig. 4 eine Seitenansicht eines Brecheisens;
Fig. 5 eine Draufsicht auf ein Brecheisen entsprechend Pfeil V der Fig. 4;
Fig. 6 eine Ansicht eines Besens;
Fig. 7 eine Ansicht einer Schaufel;
Fig. 8 eine Seitenansicht einer anderen Ausführungsform eines Brecheisens;
Fig. 9 eine Ansicht des Brecheisens gemäß Fig. 8 entsprechend Pfeil IX;
Fig. 10 eine Seitenansicht eines, zur Kraftverstärkung bei Schraubvorgängen an Radmuttern bestimmten Gerätes;
Fig. 11 eine Seitenansicht eines Kupplungshakens.

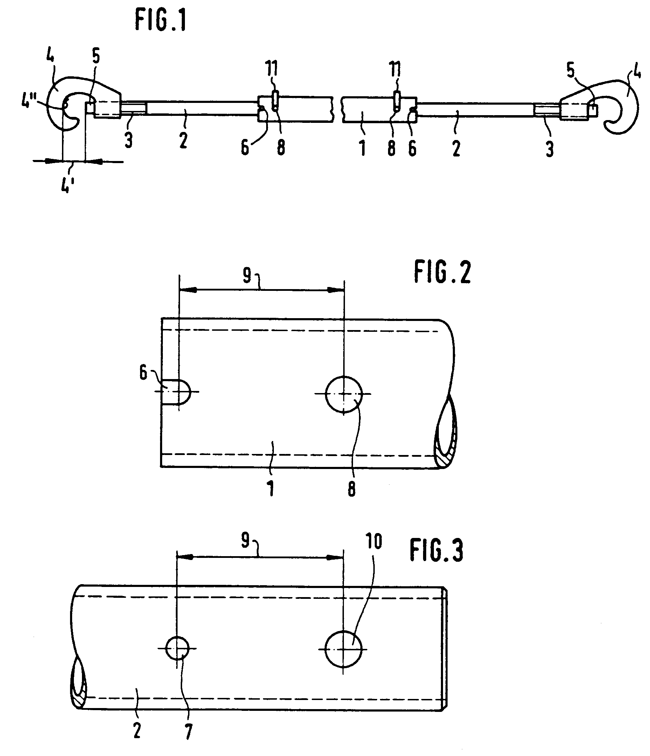

Fig. 1 zeigt eine Universalstange 1, die als rohrförmiger Grundkörper ausgestaltet ist, deren beide, untereinander gleichartig ausgestaltete Enden zum Einstecken diverser, im folgenden noch zu erläuternder Geräte, insbesondere zur Fixierung derselben bestimmt und ausgestaltet sind.

So sind in dem in Fig. 1 gezeigten Ausführungsbeispiel in die Enden der Universalstange 1 Kupplungsstangen 2 eingesteckt, so daß erstere im Sinne einer Abschleppstange für Kraftfahrzeuge ausgerüstet ist. Die Kupplungsstangen 2 sind wiederum untereinander gleich ausgebildet und an ihren, der Universalstange 1 abgekehrten Enden mit Gewindeabschnitten 3 ausgerüstet. Diese dienen dem Aufschrauben von Kupplungshaken 4, die derart ausgebildet sind, daß sie zum formschlüssigen Eingreifen in übliche, an Kraftfahrzeugen angebrachte Abschleppösen bestimmt sind, und zwar derart, daß sich über diese in den Zeichnungen nicht dargestellten Abschleppösen eine Längskraft in Richtung der gemeinsamen Achsen der Kupplungsstangen 2 sowie der Universalstange 1 übertragen läßt.

Die, den Abschlepphaken 4 zugekehrten Enden der Gewindeabschnitte 3 sind mit einer Dämpfungskappe 5 überzogen, welche aus einem geeigneten Kunststoff, z.B. einem Elastomer besteht und über welche ein fester, insbesondere spielfreier Sitz das Abschlepphakens 4 in der jeweiligen Zugöse sichergestellt ist. Die Befestigung dieser Dämpfungskappe 5 an den Gewindeabschnitten 3 kann in grundsätzlich beliebiger Weise erfolgen. Man erkennt, daß der Abstand 4' zwischen dem, zur Zugkraftübertragung bestimmten Abschnitt 4'' des Abschlepphakens 4 und dem zugekehrten Ende der Dämpfungskappe 5 über eine Verschraubungsbewegung entlang des Gewindeabschnitts 3 einstellbar ist. Der Abschlepphaken ist auf diese Weise an unterschiedliche Abmessungen einer Abschleppöse anpaßbar, und zwar mit Hinblick auf einen spielfreien Sitz.

Zur Erläuterung der Fixierung der Kupplungsstangen 2 an den zugekehrten Enden der Universalstange 1 wird im folgenden ergänzend auf die Zeichnungsfiguren 2 und 3 Bezug genommen. Mit 6 ist eine, in die Wandung des stirnseitigen Endes der Universalstange 1 eingearbeitete, in Axialrichtung offene Ausnehmung bezeichnet, die zum formschlüssigen Zusammenwirken mit einem, auf der Außenseite der Kupplungsstange 2 angebrachten Vorsprung 7 bestimmt ist. Grundsätzlich können auch Zwei derartige Ausnehmungen 6 nebst Vorsprüngen 7 - einander diametral gegenüberliegend - vorgesehen sein. Die Ausnehmungen 6 in Verbindung mit den Vorsprüngen 7 bilden eine Einsteckbegrenzung für die Kupplungsstange 2, so daß diese im montierten Zustand stets um ein definiertes Maß aus der Universalstange 1 herausragt.

Die Universalstange 1 ist an ihren beiden Enden ferner mit einer durchgehenden, sich senkrecht zu ihrer Achse erstreckenden Bohrung 8 versehen, die sich - in axialer Richtung gesehen - in einem Abstand 9 von der Ausnehmung 6 befindet. Die Ausnehmung 6 und die Bohrung 8 befinden sich auf einer, sich achsparallel zu der Universalstange 1 erstreckenden Mantellinie derselben.

Mit 10 ist eine sich senkrecht zur Achse der Kupplungsstange 2 erstreckende durchgehende Bohrung bezeichnet, die in einem Abstand 9 von dem Vorsprung 7, und zwar entlang einer achsparallelen Mantellinie, auf der sich auch der Vorsprung 7 befindet, angeordnet ist. Die Bohrungen 8, 10 weisen gleiche Durchmessermaße auf. Man erkannt, daß in der Einsteckposition der Kupplungsstange 2 die Bohrungen 8, 10 fluchtend zueinander angeordnet sind, so daß durch Einschieben eines Bolzens, Stackers oder dergleichen in diese Bohrungen 8, 10 die Einsteckposition der Kupplungsstange 2 gesichert ist. Stecker, Bolzen oder dergleichen sollten zweckmäßigerweise unverlierbar an der Kupplungsstange 2 angebracht werden. In der Zeichnungsfig. 1 sind sogenannte Rohrklappstecker 11 dargestellt, über welche die Sicherung der Kupplungsstange 2 gegenüber der Universalstange 1 erfolgt. Ein wesentlicher Vorteil dieser oben dargelegten Verbindung der Kupplungsstange 2 mit der Universalstange 1 besteht darin, daß diese im praktischen Einsatzfall, auch unter ungünstigen Lichtverhältnissen handhabbar ist, da aufgrund des durch Drehbewegungen herbeiführbaren Einrastens des Vorsprungs 7 in der Ausnehmung 6 die Bohrungen 8, 10 zwangsläufig in eine zueinander fluchtende Position überführt sind, wodurch die Montage eines Steckers, Bolzens oder dergleichen erleichtert wird.

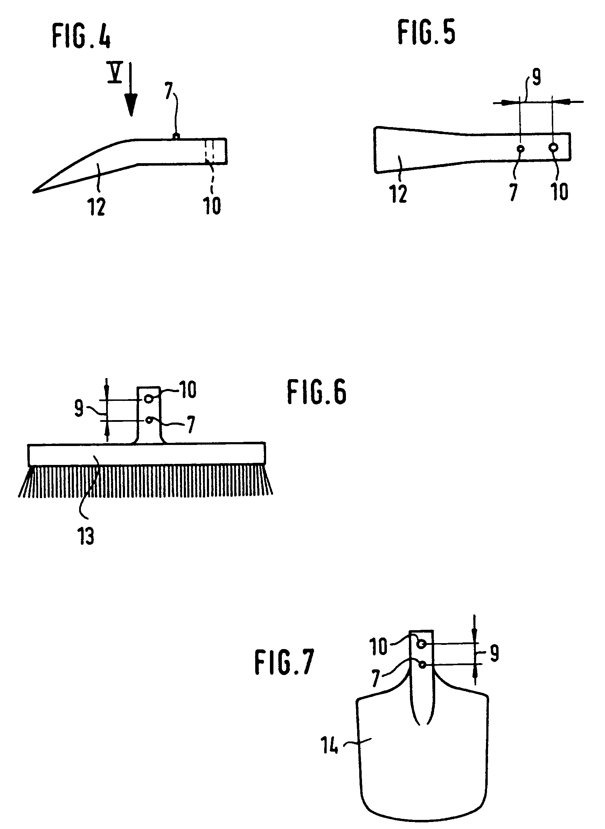

Die Fig. 4 und 5 zeigen als weiteres Ausführungsbeispiel eines, mit der Universalstange 1 zu verknüpfenden Gerätes ein Brecheisen 12, welches an seinem einen Ende die für ein solches Werkzeug an sich bekannte, charakteristische Gestaltung aufweist und welches an dem anderen Ende Durchmessermaße und Gestaltungen aufweist, die denjenigen der Kupplungsstange 2 entsprechen. So ist dieses Ende mit einem Vorsprung 7 und - unter einem Abstand 9 hierzu - mit einer durchgehenden Bohrung 10 versehen, welche zum Zusammenwirken mit der Ausnehmung 6 sowie der Bohrung 8 der Universelstange 1 bestimmt sind. Die Universalstange 1 kann somit ersatzweise für das in Fig. 1 gezeigte System der beiden Kupplungsstangen 2 auch mit wenigen Handgriffen mit einem Brecheisen ausgerüstet werden und steht als entsprechendes Werkzeug beispielsweise zum Aufbrechen von Kfz-Türen im Falle eines Unfalls zur Verfügung. Die Sicherung des Brecheisens 12 an der Universalstange 1 über die Bohrungen 8, 10 erfolgt wiederum über Bolzen, Stecker oder dergleichen.

Die Fig. 6 und 7 zeigen als weitere, mit der Universalstange 1 verknüpfbare Geräte einen Besen 13 und eine Schaufel 14. Beide Geräte sind an ihrem einen Ende zum Einstecken in das zugekehrte Ende einer Universelstange 1 bestimmt und ausgestaltet und können in gleicher Weise des oben beschriebene Brecheisen 12 mit der Universalstange 1 verbunden werden. Es sind zu diesem Zweck beide Geräte mit einer Bohrung 10 sowie einem Vorsprung 7 ausgerüstet, und zwar unter einem Abstand 9 voneinander.

Die Länge der Universalstange 1 ist dahingehend ausgerichtet, daß diese einerseits bequem als Bordwerkzeug von Kraftfahrzeugen unterbringbar ist, daß hingegen andererseits eine einwandfreie Nutzung der durch Verbindung der Universalstange 1 mit den oben beschriebenen unterschiedlichen Geräten sich ergebenden Werkzeuge möglich ist. Nachdem ein Teil der Geräte, mit denen die Universalstange 1 ausrüstbar ist, insbesondere bei Verkehrsunfällen eingesetzt werden können, kann die Universalstange 1 mit einer, eine Signalfunktion ausübenden farblichen Beschichtung, beispielweise mittels fluoreszierender Farben versehen sein.

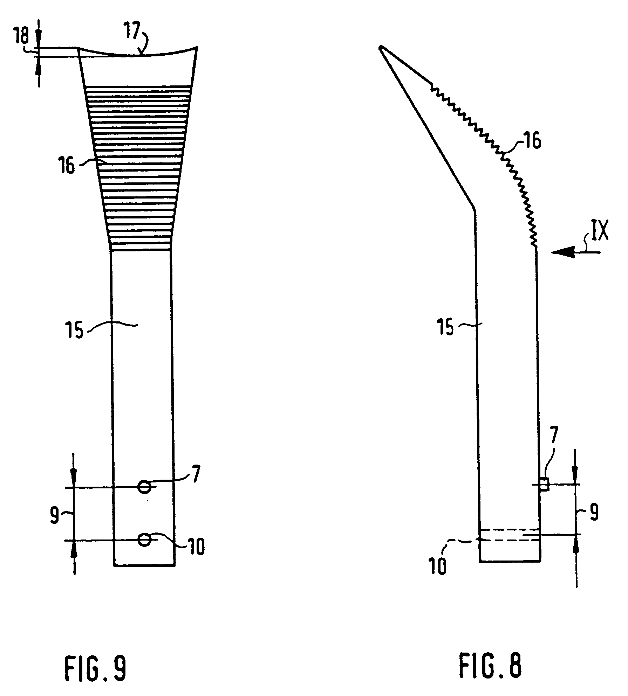

Die Fig. 8 und 9 zeigen eine weitere Ausführungsform eines Brecheisens, welches in gleicher Weise wie die vorstehend beschriebenen Geräte mit der Universalstange 1 kuppelbar ist. Des Brecheisen 15 weist demzufolge an seinem, zum Einstecken in die Universalstange bestimmten Ende eine Bohrung 10 und - im Abstand 9 von dieser - einen Vorsprung 7 auf. Der Abstand 9 erstreckt sich in gleicher Richtung wie bei den anderen Geräten.

Das Brecheisen 15 weist an seinem, der Bohrung 10 und damit seinem Kupplungsabschnitt abgekehrten Ende wiederum eine charakteristische Gestaltung auf und ist zusätzlich auf seiner konvexen Seite mit einer Profilierung, hier durchgehenden Rillen 16 versehen, die im Querschnitt eine beispielsweise dreieckige Gestalt aufweisen. Das Brecheisen 15 ist ferner an seinem schneidenartig zulaufenden, dem Kupplungsabschnitt abgekehrten Endbereich mit einer Einformung 17 versehen, die - in der Ansicht gemäß Fig. 9 somit in der Schneidenebene, gesehen - eine kreisabschnittförmige Gestaltung aufweist und mit einer Tiefe 18 von beispielsweise 5 mm ausgebildet ist. Die Ausnehmung 17 erstreckt sich vorzugsweise symmetrisch bezüglich einer in der Zeichenebene der Fig. 2 verlaufenden Mittelachse des Brecheisens 15. Die Rillen 16 können beispielsweise eine Tiefe von ca. 3 mm aufweisen, wobei die Grundseite ihrer dreieckförmigen Querschnittsgestalt eine Abmessung von 5 mm aufweisen kann. Das gesamte Brecheisen 15 kann beispielsweise eine Länge von 350 mm aufweisen.

Der Vorteil eines im Sinne der Fig. 8 und 9 ausgebildeten Brecheisens 15 besteht darin, daß sich beim praktischen Gebrauch aufgrund der Rillen 16 beim gewaltsamen Öffnen einer Kraftfahrzeugtür ein Widerlager am Türrahmen ergibt, welches ein Abgleiten des Brecheisens verhindert und somit den Öffnungsvorgang unterstützt. Dies bedeutet, daß die Profilierung hinsichtlich der Rillenabmessungen sowie der Profiltiefe oder Profilgestaltung mit der Maßgabe ausgelegt ist, daß sich ein Formschluß zu Kanten von Türrahmenteilen von Kraftfahrzeugen herstellen läßt. Gleichzeitig begünstigt die Ausbildung des vorderen Endbereichs des Brecheisens, nämlich die dortige Einformung 17 das Eindringen in vorhandene Spalte zwischen Türahmen und Tür, wobei gleichzeitig an zwei voneinander beabstandeten Punkten, nämlich den seitlichen Endbereichen der Einformung 17 eine Kraftübertragung auf die Tür gegeben ist.

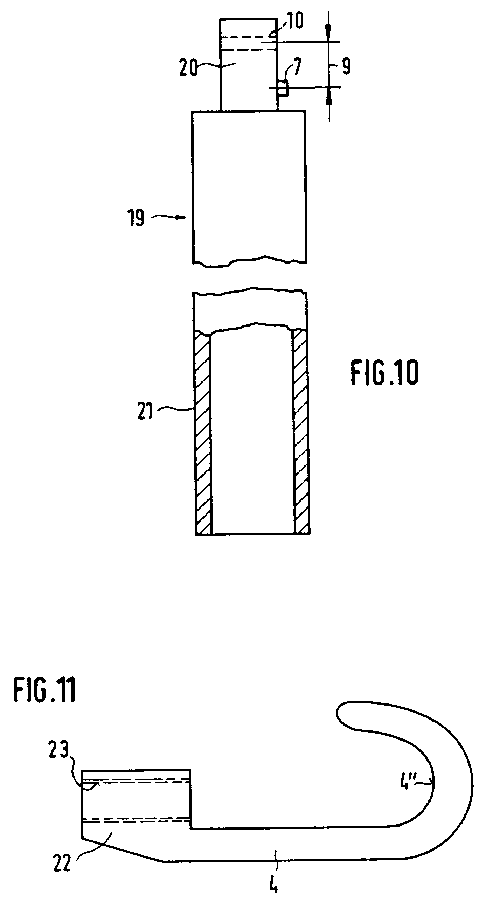

Fig. 10 zeigt ein Gerät 19, welches speziell zur Kraftverstärkung in Verbindung mit Schraubvorgängen bei Radmuttern bestimmt ist und an seinem einen Ende wiederum mit einer Bohrung 10 und in einem Abstand 9 von dieser mit wenigstens einem Vorsprung 7 ausgerüstet ist, so daß dieses Gerät 19 in gleicher Weise wies die oben bereits beschriebenen Geräte zum Einstecken und Fixieren an einer Universalstange 1 bestimmt ist.

Das Gerät 19 besteht im wesentlichen aus einem, die genannte Bohrung 10 sowie den Vorsprung 7 enthaltenden Anschlußteil 20 und einem rohrförmigen Grundkörper 21, der mit dem Anschlußteil 20 in fester Verbindung steht. Der Rohrkörper 21 weist einen Innendurchmesser auf, der Zur Aufnahme größtmöglicher Kreuzschlüssel oder sonstiger Radmutternschlüssel bestimmt ist, die zur Verwendung für die Radmuttern von Lastkraftwagen bestimmt sind. Es weist der Grundkörper 21 darüber hinaus eine Länge auf, die auf die zu erzielende Hebelwirkung hin zugeschnitten ist, d.h. beispielsweise 1 m oder auch mehr betragen kann.

Zum Gebrauch dieses Gerätes 19 wird dieses mit dem einen Ende der Universalstange 1 gekuppelt, wobei der Grundkörper 21 über das zugekehrte Ende eines Radmutternschlüssels, z.B. eines Kreuzschlüssels geschoben wird, so daß über die Universalstange ein, entsprechend der Länge derselben einschließlich der Länge des Grundkörpers 21 erhöhtes Drehmoment auf die Radmutter übertragbar ist.

Ein solches Gerät 19 kann beispielsweise auch derart ausgestaltet sein, daß die Verbindung zwischen dem Anschlußteil 20 und dem Grundkörper 21 lösbar ausgebildet ist, so daß sich dieses Gerät auch - in gegebenenfalls kleinerer Ausführungsform - auch zur Verwendung bei Personenkraftwagen eignet.

Fig. 11 schließlich zeigt ein Ausführungsbeispiel eines Kupplungshakens 4, der an seinem, dem Abschnitt 4'' gegenüberliegenden Ende 22 mit einer Gewindebohrung 23 ausgerüstet ist, die ihrerseits zur Aufnahme des Zugekehrten Endes einer Universalstange 1 bestimmt ist. Indem über diese Gewindebohrung 23 die Kupplungsstange in Richtung auf den Abschnitt 4'' hin bewegbar ist, besteht die Möglichkeit - wie oben bereits ausgeführt - die in diesem Sinne ausgebildete Abschleppstange in eine nahezu spielfreie Verbindung mit der Abschleppöse eines Kraftfahrzeugs zu bringen.

## Patentansprüche

1. Bordwerkzeug für Straßenfahrzeuge mit einer, der Handhabung und als Träger für unterschiedliche Geräte bestimmten Universalstange (1), deren wenigstens eines Ende zur auswechselbaren Befestigung unterschiedlicher Geräte hin ausgestaltet ist, wobei die zur Verbindung mit der Universalstange (1) bestimmten Geräte mit untereinander gleichen Kupplungsabschnitten ausgerüstet sind, die zum Zusammenwirken mit einem entsprechenden Ende bzw. Gegenabschnitt der Universalstange (1) bestimmt sind,
dadurch gekennzeichnet,
- daß beide Enden der Universalstange (1) zur auswechselbaren Befestigung jeweils eines Gerätes ausgestaltet sind,
- daß das Gerät eine Kupplungsstange (2) mit Abschlepphaken (4), ein Brecheisen (12,15), ein Besen (13), eine Schaufel (14), ein Schraubwerkzeug, ein Gerät (19) zur Kraftverstärkung oder dergleichen ist und
- daß die Universalstange (1) eine zur Ausübung einer Signalfunktion geeignete, insbesondere reflektierend wirkende farbliche Beschichtung trägt.

2. Bordwerkzeug nach Anspruch 1,
dadurch gekennzeichnet,
- daß der Abschlepphaken (4) auswechselbar auf der Kupplungsstange (2) angeordnet, insbesondere mit dieser verschraubt ist, und
- daß das, dem Abschlepphaken (4) zugekehrte Ende der Kupplungsstange (2) mit einer Dämpfungskappe (5) ausgerüstet ist.

3. Bordwerkzeug nach Anspruch 2,
dadurch gekennzeichnet,
- daß die Dämpfungskappe (5) aus einem Kunststoff, insbesondere einem elastomeren Werkstoff besteht und
- daß die Dämpfungskappe (5) einem, zur Zugkraftübertragung dienenden Teil des Abschlepphakens (4) gegenüberliegend angeordnet ist.

4. Bordwerkzeug nach einem der vorangegangenen Ansprüche 1 bis 3,
dadurch gekennzeichnet,
- daß die Enden der an der Universalstange (1) anzubringenden Geräte in das zugekehrte Ende der Universalstange (1) einsteckbar ausgestaltet sind und
- daß zur Arretierung der Geräte gegenüber der Universalstange (1) zueinander fluchtende Bohrungen (8, 10) der genannten Enden vorgesehen sind, in die ein, einen in Achsrichtung der Universalstange (1) wirksamen Formschluß bereitstellender Bolzen einsteckbar ist.

5. Bordwerkzeug nach Anspruch 4,
dadurch gekennzeichnet,
- daß die Außenseiten der einzusteckenden Enden der Geräte mit wenigstens einem Vorsprung (7) versehen sind, der zwecks Begrenzung der Einsteckbewegung mit wenigstens einer stirnseitigen Ausnehmung (6) des zugekehrten Endes der Universalstange (1) in Eingriff bringbar ist und
- daß bei bestehendem Eingriffszustand zwischen dem Vorsprung (7) und der Ausnehmung (6) die Bohrungen (8,10) sich in einer zueinander fluchtenden Anordnung befinden.

6. Bordwerkzeug nach einem der vorangegangenen Ansprüche 1 bis 5,
dadurch gekennzeichnet,
- daß das Brecheisen (15) an seinem, seinem Kupplungsabschnitt abgekehrten Ende, und zwar auf einem konvex gekrümmten oder abgewinkelter Teil eine Profilierung, insbesondere Rillen (16) aufweist.

7. Bordwerkzeug nach einem der vorangegangenen Ansprüche 1 bis 6,
dadurch gekennzeichnet,
- daß das Brecheisen (15) an seinem, seinem Kupplungsabschnitt abgekehrten, schneidenartig spitz zulaufenden Ende eine Einformung (17) aufweist.

8. Bordwerkzeug nach einem der vorangegangenen Ansprüche 1 bis 7,
dadurch gekennzeichnet,
- daß das Gerät (19) zur Kraftverstärkung aus einem Kupplungsabschnitt (20) und einem rohrförmigen, zum Überschieben über das zugekehrte Ende eines Radmutternschlüssels, insbesondere eines Kreuzschlüssels bestimmten und ausgestalteten Grundkörper (21) besteht.

9. Bordwerkzeug nach Anspruch 8,
dadurch gekennzeichnet,
- daß der Kupplungsabschnitt (20) lösbar mit dem Grundkörper (21) in Verbindung steht.

## Claims

1. On-board tool for road vehicles, comprising a universal rod (1) designed for manual use and as a carrier for different implements, wherein at least one end of the rod is shaped for the replaceable securement of different implements, wherein the implements designed for connection with the universal rod (1) are equipped among themselves with similar coupling sections which are arranged for cooperation with a corresponding end or opposing section of the universal rod (1),
characterised in that
- both ends of the universal rod (1) are shaped for the replaceable securement of an implement,
- the implement is a coupling rod (2) with tow hook (4), a crowbar (12, 15), a brush (13), a shovel (14), a screwing tool, an implement (19) for force boosting or the like, and
- the universal rod (1) has a coloured, in particular reflective, coating suitable for carrying out a signalling function.

2. On-board tool according to claim 1,
characterised in that
- the tow hook (4) is arranged replaceably on the coupling rod (2), in particular by being screwed to it,
- the end of the coupling rod (2) adjacent to the tow hook (4) is fitted with a damping cap (5).

3. On-board tool according to claim 2,
characterised in that
- the damping cap (5) is of a plastics material, in particular an elastomeric material, and
- the damping cap (5) is positioned opposite a part of the tow hook (4) which serves for the transmission of traction.

4. On-board tool according to one of the preceding claims 1 to 3,
characterised in that
- the ends of the implements to be fitted to the universal rod (1) are shaped to be a push-fit in the respective ends of the universal rod (1), and
- in order to arrest the implements in relation to the universal rod (1), aligned bores (8, 10) are provided in the said ends, into which bores bolts are arranged to be pushed which effect a shape locking effective in the axial direction of the universal rod (1).

5. On-board tool according to claim 4,
characterised in that
- the outsides of the push-fit ends of the implements are provided with at least one projection (7) which for the purpose of limiting the push-in movement can be brought into engagement with at least one edge recess (6) in the adjacent end of the universal rod (1), and
- on the achievement of the engaged state between the projection (7) and the recess (6), the bores (8, 10) will be arranged in alignment with one another.

6. On-board tool according to one of the preceding claims 1 to 5,
characterised in that
- the crowbar (15) includes a profiling, in particular grooves (16), at its end adjacent to its coupling section, and indeed on a convexly curved or angled portion.

7. On-board tool according to one of the preceding claims 1 to 6,
characterised in that
- the crowbar (15) has a concavity (17) with pointed ends at its end remote from its coupling section.

8. On-board tool according to one of the preceding claims 1 to 7,
characterised in that
- the implement (19) for force boosting consists of a coupling section (20) and a tubular base member (21) shaped and dimensioned to be fitted over the facing end of a wheel-nut wrench, particularly a cross-over wrench.

9. On-board tool according to claim 8,
characterised in that
- the coupling section (20) is releasably connected to the base member (21).

## Revendications

1. Outil pour des véhicules automobiles, comportant une barre universelle (1), conçue pour le maniement et comme support de différents outils, dont au moins une extrémité est construite pour la fixation de différents outils interchangeables, les outils destinés à être fixés sur la barre universelle (1) étant équipés des mêmes tronçons d'accouplement qui sont destinés à coopérer avec une extrémité correspondante ou contre-tronçon de la barre universelle (1),
caractérisé en ce que
- les deux extrémités de la barre universelle (1) sont construites chacune pour la fixation d'un outil interchangeable,
- l'outil est une barre d'accouplement (2) comportant des crochets de remorquage (4), un pied-de-biche (12, 15), un balai (13), une pelle (14), un outil pour visser, un outil (19) pour amplifier une force, etc., et
- la barre universelle (1) a un revêtement apte à exercer une fonction de signalisation, notamment un revêtement coloré réfléchissant.

2. Outil selon la revendication 1,
caractérisé en ce que
- le crochet de remorquage (4) est agencé sur la barre d'accouplement (2) de manière à pouvoir être échangé, notamment en étant vissé sur celle-ci, et
- l'extrémité, placée du côté du crochet de remorquage (4), de la barre d'accouplement (2) est équipée d'un embout d'amortissement (5).

3. Outil selon la revendication 2,
caractérisé en ce que
- l'embout d'amortissement (5) est en une matière synthétique, notamment en élastomère, et
- l'embout d'amortissement (5) est disposé face à une partie, servant à transmettre la force de traction, du crochet de remorquage (4).

4. Outil selon l'une des revendications précédentes 1 à 3,
caractérisé en ce que
- les extrémités des outils à fixer sur la barre universelle (1) sont construites de manière à pouvoir être enfichées dans l'extrémité correspondante de la barre universelle (1), et
- des trous alignés (8, 10) desdites extrémités sont prévus pour arrêter les outils par rapport à la barre universelle (1), trous dans lesquels peut être enfichée une cheville créant une fermeture géométrique efficace dans la direction de l'axe de la barre universelle (1).

5. Outil selon la revendication 4,
caractérisé en ce que
- l'extérieur des extrémités à enficher des outils est muni d'au moins une partie en saillie (7) qui peut être mise en prise avec au moins une partie en creux (6) frontale de l'extrémité correspondante de la barre universelle (1) afin de limiter le mouvement d'enfichage, et
- lorsque la partie en saillie (7) et la partie en creux (6) sont en prise, les trous (8, 10) sont alignés l'un sur l'autre.

6. Outil selon l'une des revendications précédentes 1 à 5,
caractérisé en ce que
- le pied-de-biche (15) comporte un profilage, notamment des rainures (16), sur son extrémité opposée au tronçon d'accouplement, à savoir sur une partie cintrée ou coudée de manière convexe.

7. Outil selon l'une des revendications précédentes 1 à 6,
caractérisé en ce que
- le pied-de-biche (15) a une forme particulière (17) à son extrémité qui est opposée au tronçon d'accouplement et qui s'étend comme une pointe de burin.

8. Outil selon l'une des revendications précédentes 1 à 7,
caractérisé en ce que
- l'outil (19) pour amplifier une force est constitué d'un tronçon d'accouplement (20) et d'un corps principal (21) tubulaire construit pour et destiné à être glissé autour de l'extrémité correspondante d'une clé pour écrous de roues, notamment d'une clé six-pans en croix.

9. Outil selon la revendication 8,
caractérisé en ce que
- le tronçon d'accouplement (20) est lié au corps principal (21) de manière à pouvoir être démonté.
